# EUROPEAN PATENT APPLICATION

(11) **EP 2 139 155 A1**
(43) Date of publication of application: **30.12.2009**
(21) Application number: 08104576.7
(22) Date of filing: 27.06.2008
(51) Int. Cl.: H04L 12/12, H04M 11/06

(54) **Method and device for processing data and communication system comprising such device**

(71) Applicant: Nokia Siemens Networks Oy, 02610 Espoo (FI)
(72) Inventor: Block, Carsten, 85567, Grafing (DE); Filipiak, Frank, 81476, München (DE); Haustein, Thomas, 81735, München (DE); Kirchner, Georg, 85244, Röhrmoos (DE); Mück, Josef, 81675, München (DE); Treyer, Thomas, 81379, München (DE); Zirwas, Wolfgang, 81249, München (DE)
(74) Representative: Bruglachner, Thomas E.

(57) **Abstract**

A method and a device for processing data at a network element are provided, wherein the network element indicates to a remote network element to enter a power saving mode; wherein the network element enters the power saving mode; and wherein after a predetermined period of time, the network element is activated and checks whether user traffic is to be processed. Furthermore, a communication system is suggested comprising said device.

## Description

The invention relates to a method and to a device for processing data and to a communication system comprising such a device.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

Currently, standard VDSL uses up to 4 different frequency bands, two for upstream (from the client to the telecom provider) and two for downstream. Suitable modulation techniques are QAM (quadrature amplitude modulation) or DMT (discrete multitone modulation).

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices (COs), from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

In current xDSL technology an end-user (i.e. a customer premises equipment, CPE) is provided with a single connection to a linecard of the CO. Once the connection is established, a carrier signal is used to keep the CPE and the CO-linecard in a synchronous mode.

Disadvantageously, such approach consumes power even if there are no user data exchanged between the CO and the CPE. Transmission power is required as long as the connection exists. This concept may lead to a significant waste of energy in particular as most customers do not switch off their DSL modems every time they go offline.

Another disadvantage stems from the fact that in case the customer switches off the DSL modem, a training phase has to be processed after the modem is switched on again and this leads to a considerable delay until a connection will be up and running again.

The **problem** to be solved is to overcome the disadvantages set forth above and in particular to allow an efficient approach for operating a DSL modem and/or a DSL connection by reducing an overall power consumption thereof.

This problem is solved according to the features of the independent claims. Further embodiments result from the depending claims.

In order to overcome this problem, a method for processing data at a network element is provided
- wherein the network element indicates to a remote network element to enter a power saving mode;
- wherein the network element enters the power saving mode;
- wherein after a predetermined period of time, the network element is activated and checks whether user traffic is to be processed.

This advantageously allows the network element to save energy preferably by repeatedly entering said power saving mode switching off power consuming units. Getting re-activated, e.g., on a regular basis, ensures that the network element and the remote network element remain synchronized with one another.

In an embodiment, the network element is autonomously activated, in particular re-activated after a timer expires.

In another embodiment, after said predetermined period of time, the network element and the remote network element are synchronized. For example, the network element and the remote network element can be synchronized by the remote network element sending synchronization data, e.g. a message or a signal utilized for synchronization purposes, to the network element.

In a further embodiment, in said power saving mode the network element switches off signal handling and/or unused chip functions.

In a next embodiment, the network element enters the power saving mode upon receipt of a confirmation from the remote network element.

It is also an embodiment that the network element detects that no user traffic is processed and waits for a predetermined period of time before indicating to the remote network element to enter said power saving mode.

This bears in particular the advantage that short interruptions in user traffic are not misinterpreted as an end of a session and thus short interruptions with the user still being online may not lead to entering the power saving mode. However, the duration of such time period may in particular be set according to the time the network element requires until the connection can be used again.

The problem is also solved by a method for processing data at a remote network element,
- wherein a network element indicates to the remote network element to enter a power saving mode;
- wherein the remote network element enters the power saving mode;
- wherein after a predetermined period of time, the remote network element is activated and checks whether user traffic is to be processed.

Hence, also the remote network device may advantageously utilize the "micro-sleep" scenario described herein and thus reduces the overall amount of energy required.

Pursuant to another embodiment, the remote network element is autonomously activated, in particular re-activated after a timer expires.

According to an embodiment, the remote network element after being activated provides synchronization information to the network element.

According to another embodiment, in said power saving mode the remote network element switches off signal handling and/or unused chip functions.

In yet another embodiment, the network element is a customer premises equipment.

According to a next embodiment, the remote network element is or is associated with a CO, a DSLAM or a line card of a CO or of a DSLAM.

Pursuant to yet an embodiment, the network element is connected via at least one line to the remote network element and via at least one connection to at least one user,
- wherein the at least one line to the remote network element is controlled according to bandwidth and/or traffic requested by the at least one user.

According to an embodiment, the at least one connection to the at least one user comprises one of the following:
- an xDSL line;
- an Ethernet connection;
- a wireless connection;
- a fiber line.

It is also an embodiment that at least one line to the remote network element is activated if the at least one user requires and/or requests an increase of bandwidth.

It is yet an embodiment that at least one line to the remote network element is deactivated if the at least one user does not require the bandwidth provided for a predetermined amount of time.

A lapsing timer may indicate that such amount of time is over.

According to an embodiment the at least line to the remote network element is operated in a MIMO mode.

According to a further embodiment a message, in particular an OAM signaling message, is conveyed to the remote network element to activate and/or deactivate at last on line to the network.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a network element, a CO, a DSLAM and/or a CPE.

The problem stated supra is further solved by a communication system comprising the device as described herein.

Embodiments of the invention are shown and illustrated in the following figure:
- Fig.1: shows a CO and/or DSLAM communicating with three CPEs via digital subscriber lines, wherein keep-alive messages are used to maintain the connection thereby allowing to deactivate modems in between said keep-alive messages;
- Fig.2: shows a message chart between a CO/DSLAM and a CPE, both entering a sleep mode and keeping synchronized between several subsequent sleep modes;
- Fig.3: shows a message chart based on Fig.2, wherein the CPE detects user traffic to be processed and initiates re-activation of the normal operation mode of the digital subscriber line;
- Fig.4: shows a scenario comprising a Macro-CPE that is located adjacent and connected to several users via user lines as well as connected to a CO linecard via several DSL lines, wherein the Macro-CPE is enabled to control the DSL lines subsequent to user requests for bandwidth and/or traffic.

### "Micro-Sleep" Functionality

Existing CPE hardware and/or software can be enhanced to reduce power consumption on CPE and/or on CO site in case of no user traffic.

Such objective can be reached by selectively switching off parts of the modems a the CO, DSLAM or at the user's site (CPE).

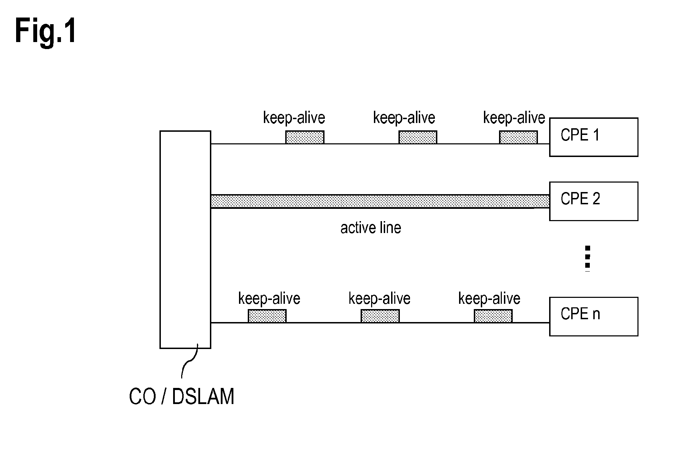

The effect of such power-saving is depicted in **Fig.1**. A CO and/or DSLAM supplies several customer premises equipments CPE1 to CPEn via several xDSL connections. An active connection is shown between the CO and CPE2, whereas there is no user traffic between CO and CPE1 and also no user traffic between CO and CPEn. Hence "keep alive" messages are exchanged on such lines allowing the respective modem at the CO as well as the modem at CPE1 and CPEn to enter a sleep mode between such keep-alive messaging.

An OAM messaging, in particular OAM signaling messages, can be utilized synchronizing such power on/off mechanism of the modems as well as keeping the clock signal at the various modems in synchronization.

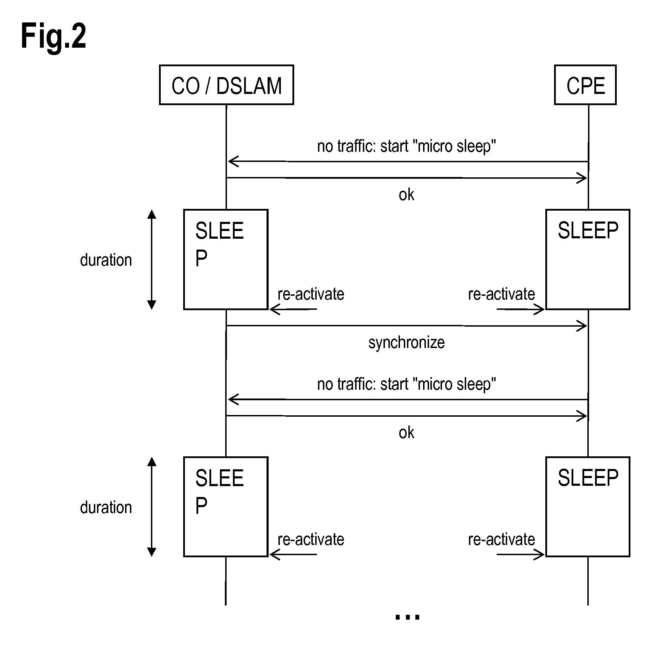

According to **Fig.2**, once a CPE detects that no user traffic is conveyed (either sent or received), the CPE sends a message (e.g., a Micro-Sleep-start message) to inform the modem at the CO (or at the DSLAM). Both, the CPE and the modem at the CO may thus for a predetermined duration enter a power-saving (SLEEP) mode and both may preferably switch off the carrier signal handling.

The modem affected may further disable unused chip functions to save as much power as possible.

To avoid a persistent loss of synchronization, both modems (at the CO as well as at the CPE) may autonomously re-enter an active state after a predetermined period of time ("reactivate"). Then, a signal, e.g. a short carrier signal ("synchronize"), may be sent from the CO to CPE to maintain the synchronization between the CO and the (at least one) CPE. Afterwards, if there is still no user data to be processed, both modems may re-enter the power-saving mode.

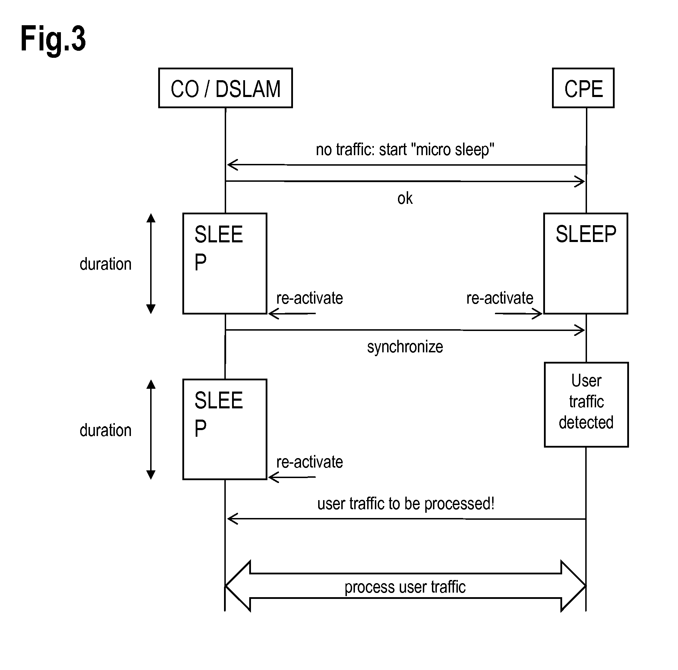

If there is user traffic detected by the CPE (see **Fig.3**), a "user traffic to be processed" message will be sent to the CO during the synchronization phase. Once awake, both modems will stay active and process the traffic in a normal mode of operation.

Advantageously, the solution suggested is backwards compatible to the existing methods and hence be compatible with legacy equipment. In order to utilize the new features provided, the modems (at the CO as well as the CPE) may be equipped to handle the OAM messages as described.

However, if an old CPE interacts with a modem at the CO that is capable of providing the features as discussed herein, the old CPE does not provide any kind of sleep-message and hence the modem at the CO is not going to enter a power-saving mode. If the old modem is located at the CO side and the CPE is capable of processing the messages as described herein, the CPE-Modem may send sleep-messages, but the modem at the CO is not able to understand such message and hence will not enter a power-saving mode. As the modem at the CO does not confirm the sleep-message, both modems will not enter the power-saving mode.

This micro-sleep approach may be combined with a particular device (Macro-CPE) that may be deployed near the user's location as will be described hereinafter.

### "Macro-CPE" functionality

This approach introduces a new unit (also referred to as "Macro-CPE" or "Macro-DSLAM") that can be deployed adjacent to at least one CPE, preferably at the premises of the customer(s).

For such purpose, said Macro-CPE comprises an interface comprising at least one connection to a CO, in particular to a linecard of a CO. Each connection may be a digital subscriber line. Further, the Macro-CPE comprises at least one connection towards at least one user, in particular towards at least one CPE.

The connections towards the CO are preferably administered by the Macro-CPE according to requirements and/or demands of the users and/or CPEs.

Thus, the Macro-CPE may provide connections and/or bandwidth as requested by the users in a transparent manner to the users, i.e. the Macro-CPE may automatically enable and/or disable said connections towards the CPO to meet the users' requests for bandwidth.

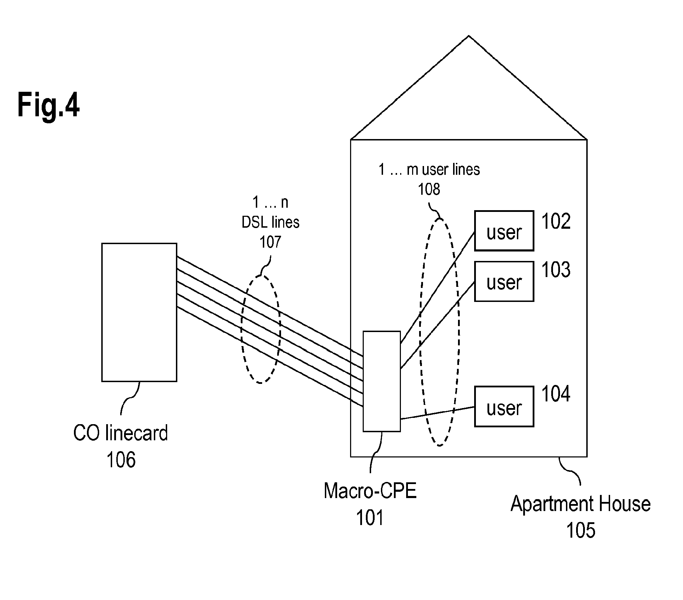

For example, as shown in **Fig.4** a Macro-CPE 101 may be located inside an apartment house 105 and connected to several users 102 to 104 (i.e. devices located in the apartments of the users).

The connections between the Macro-CPE 101 and the users 102 to 104 may utilize various technologies, in particular combinations thereof:
- xDSL-connection: Such approach would be transparent for existing end-user solutions;
- Ethernet-Connection: This approach may be advantageously used for new buildings;
- Wireless connection, e.g., WLAN: The wireless approach may fit special environments, e.g., facing difficulties running cables.
- Optical Fiber: Such approach may be advantageously used in case of high speed requirements and/or a huge number of (high-speed) users are to be supplied.

All connections to and from the users 102 to 104 are preferably collected and analyzed at the Macro-CPE 101.

The Macro-CPE 101 is further connected to the CO, in particular to the linecard(s) 106 of the CO via several xDSL lines 107.

The xDSL lines 107 are controlled and/or administered by the Macro-CPE 101 dependent on the bandwidth (or traffic) required by the users 102 to 104. Preferably, at least one xDSL line towards the CO-linecard 106 is maintained by the Macro-CPE 101. The more bandwidth required by the users 102 to 104 the more xDSL lines 107 are activated. Accordingly, in case of minor traffic, some xDSL lines 107 may be deactivated by the Macro-CPE 101.

Preferably, the active xDSL lines are operated in a MIMO mode to provide higher data rates compared to the same number of xDSL lines not being operated in MIMO mode. The n MIMO xDSL lines 107 can be assigned to m user lines 108 by the Macro-CPE 101.

Hence, a user's data rate can be supplied dynamically corresponding to the amount of lines and their respective bandwidth provided by the CO-linecard 106.

It is an alternative for MIMO processing to bond a number of n xDSL lines.

### Examples

a. In case there is no active user, one DSL line may be maintained to allow any user to get online and request traffic without (significant) delay.
b. In case there is one user active, one DSL line is kept alive to handle this user's traffic and to allow other user's to get online thereby requesting bandwidth.
c. In case of two or more active users, n DSL lines will be activated, wherein n depends on the actual amount of bandwidth required (or requested) by the users.
   - If the total load increases, a new DSL line will be switched active.
   - If the total load decreases, an active DSL line will be switched to inactive.

### Saving power

The Macro-CPE may control the amount of active xDSL lines and it may switch the xDSL lines on and off. At least one xDSL line shall be kept active for allowing the user(s) to access the network without significant delay (e.g., without a training phase to be conducted by setting up at least one xDSL line).

OAM signaling messaging may be provided that allows the Macro-CPE to inform the CO (or a DSLAM within the CO) to activate and/or to deactivate a xDSL line. In case of deactivation, preferably the affected chipset inside the DSLAM as well as the affected chipset inside the Macro-CPE may enter a power-saving mode. Upon receiving a wake-up signal message, the sleeping xDSL line will be (re-)activated.

Combining the approach of the Macro-CPE with the Micro-Sleep features as described above would allow the last active xDSL line between the Macro-CPE and the CO to enter a power saving mode ("sleep mode"). The messages introduced above ensure that the modems (at the CO as well as at the Macro-CPE) will be re-activated (in particular at a regular basis) and remain synchronized with one another. In case traffic has to be processed, both modems - after being reactivated - may stay active until there will be no further user data to be conveyed. It is noted that (after user data has been processed) preferably a predetermined time period needs to lapse until the modems enter said power-saving mode in order to avoid that the power-saving mode is entered for each short interruption of user traffic.

### List of Abbreviations:

- CO: Central Office
- CPE: Customer Premises Equipment
- DSL: Digital Subscriber Line
- DSLAM: Digital Subscriber Line Access Multiplexer
- MIMO: Multiple Input Multiple Output
- OAM: Operation and Maintenance

## Claims

1. A method for processing data at a network element,
- wherein the network element indicates to a remote network element to enter a power saving mode;
- wherein the network element enters the power saving mode;
- wherein after a predetermined period of time, the network element is activated and checks whether user traffic is to be processed.

2. The method according to claim 1, wherein the network element is autonomously activated, in particular reactivated after a timer expires.

3. The method according to any of the preceding claims, wherein after said predetermined period of time, the network element and the remote network element are synchronized.

4. The method according to claim 3, wherein after said predetermined period of time, the network element and the remote network element are synchronized by the remote network element sending synchronization data to the network element.

5. The method according to any of the preceding claims, wherein in said power saving mode the network element switches off signal handling and/or unused chip functions.

6. The method according to any of the preceding claims, wherein the network element enters the power saving mode upon receipt of a confirmation from the remote network element.

7. The method according to any of the preceding claims, wherein the network element detects that no user traffic is processed and waits for a predetermined period of time before indicating to the remote network element to enter said power saving mode.

8. A method for processing data at a remote network element,
- wherein a network element indicates to the remote network element to enter a power saving mode;
- wherein the remote network element enters the power saving mode;
- wherein after a predetermined period of time, the remote network element is activated and checks whether user traffic is to be processed.

9. The method according to claim 8, wherein the remote network element is autonomously activated, in particular re-activated after a timer expires.

10. The method according to any of claims 8 or 9, wherein the remote network element after being activated provides synchronization information to the network element.

11. The method according to any claims 8 to 10, wherein in said power saving mode the remote network element switches off signal handling and/or unused chip functions.

12. The method according to any of the preceding claims, wherein the network element is a customer premises equipment.

13. The method according to any of the preceding claims, wherein the remote network element is or is associated with a CO, a DSLAM or a line card of a CO or of a DSLAM.

14. The method according to any of the preceding claims, wherein the network element is connected via at least one line to the remote network element and via at least one connection to at least one user,
- wherein the at least one line to the remote network element is controlled according to bandwidth and/or traffic requested by the at least one user.

15. The method according to claim 14, wherein the at least one connection to the at least one user comprises one of the following:
- an xDSL line;
- an Ethernet connection;
- a wireless connection;
- a fiber line.

16. The method according to any of claims 14 or 15, wherein at least one line to the remote network element is activated if the at least one user requires and/or requests an increase of bandwidth.

17. The method according to any of claims 14 to 16, wherein at least one line to the remote network element is deactivated if the at least one user does not require the bandwidth provided for a predetermined amount of time.

18. The method according to any of claims 14 to 17, wherein the at least line to the remote network element is operated in a MIMO mode.

19. The method according to any of claims 14 to 18, wherein a message, in particular an OAM signaling message, is conveyed to the remote network element to activate and/or deactivate at last on line to the network.

20. A device comprising a and/or being associated with a processor unit and/or a hard-wired circuit and/or a logic device that is arranged such that the method according to any of the preceding claims is executable thereon.

21. The device according to claim 20, wherein said device is a communication device, in particular a or being associated with a network element, a CO, a DSLAM and/or a CPE.

22. Communication system comprising the device according to any of claims 20 or 21.
